# EUROPÄISCHE PATENTSCHRIFT

(11) **EP 1 392 120 B1**
(45) Veröffentlichungstag und Bekanntmachung des Hinweises auf die Patenterteilung: **20.09.2006**
(21) Anmeldenummer: 02743120.4
(22) Anmeldetag: 28.05.2002
(51) Int. Cl.: A21C 9/04

(54) **VERTEILER VON FLÜSSIGEN ODER CREMEARTIGEN KOMPONENTEN FÜR DAS GARNIEREN VON LEBENSMITTELN**
DISTRIBUTOR OF LIQUID OR CREAMY CONSTITUENTS FOR GARNISHING FOOD
DISTRIBUTEUR D'INGREDIENTS LIQUIDES OU CREMEUX POUR GARNIR DES PRODUITS ALIMENTAIRES

(30) Priorität: 05.06.2001 EP 01113720
(43) Veröffentlichungstag der Anmeldung: 03.03.2004
(73) Patentinhaber: Artos S.A., 1150 Luxembourg (LU)
(72) Erfinder: DE DOMINICIS, Emanuele, I-20139 Milano (IT); DAMENO, Carlo, I-20010 Boffalora Sopra Ticino (MI) (IT); FERRIGNO, Monica, I-20139 Milano (IT); TORGHELE, Claudio, CH-6962 Viganello (CH)
(74) Vertreter: Oberosler, Ludwig
(86) Internationale Anmeldenummer: PCT/EP2002/005850
(87) Internationale Veröffentlichungsnummer: WO 2002/098234

(56) Entgegenhaltungen:
- WO-A-98/04137
- AU-A- 6 244 386
- DE-U- 20 001 194
- US-A- 3 631 818
- US-A- 5 121 677

## Beschreibung

Die Erfindung bezieht sich auf einen mechanischen Verteiler welcher insbesondere für das Garnieren von Lebensmitteln, wie z.B. Pizza, Fladen, Torten, usw., mit Saucen, Cremen oder allgemein mit flüssigen oder cremeartigen Komponenten, geeignet ist und welche über einen Schlauch und unter, z.B. von einer Pumpe erzeugten, Druck zugeführt werden. Diese Verteiler sind allgemein an einer Fertigungsstraße oder an einer mechanischen Fertigungsvorrichtung, über dem Durchlaufsbereich des zu garnierenden Grundproduktes installiert; der Garniervorgang erfolgt somit durch freien Fall und, um die regelmäßige Verteilung auf der Oberfläche des Grundproduktes zu erreichen, ist der Einsatz von mehreren, gleichmäßig über den zu garnierenden Bereich angeordneten, Schläuchen oder Düsen und der Einsatz von Luftstrahlen welche das Garnierprodukt auf dem Grundprodukt verteilen, bekannt. Diese bekannten Vorrichtungen weisen verschiedene Nachteile auf, zum Beispiel hat sich das System mit einer Vielzahl von Schläuchen oder Düsen, insbesondere für Produkte wie Tomatensauce oder dergleichen, nicht bewährt weil die Garnierprodukte selten, betreffend die Fluidität und Beschaffenheit, homogen sind und somit aus den einzelnen Düsen welche über einen einzigen Zuleitungsschlauch gespeist werden nicht gleiche Produktmengen austreten. Die Verteilung durch eine Vielzahl von Schläuchen oder Düsen bringt zudem Probleme betreffend die Reinigung und die Hygiene mit sich weil, auch nach Unterbrechung des Durchflusses, von jeder einzelnen Düse das Produkt abtropft. Weiters ist, um zu verhindern, daß während der Betriebspausen das Produkt verdirbt und um die Bildung von Schimmel und das Vermehren von Bakterien zu verhindern, der öftere Austausch dieses Teiles notwendig was sich auf die Produktionskosten negativ auswirkt.

Das System mit Verteilung durch Luftstrahle erfordert eine hohe Produkthomogenität, eine präzise Dosierung des Produktes und weiters eine Kalibrierung des Luftstrahls in Abhängigkeit von der Beschaffenheit und der Kalibrierung des Luftstrahls in Abhängigkeit von der Beschaffenheit und der Menge des Garnierproduktes, was oft eine übertriebene Verteilung mit Reinigungsproblemen, bzw. eine mangelhafte und somit lückenhafte Verteilung, mit sich bringt.

Es ist, insbesondere aus der US-5,921,170 (Khatchadourian), ein Verteiler bekannt bei welchem das Garnierprodukt auf das darunterliegende Grundprodukt fällt welches auf einer sich, gemäß einer vertikalen Achse, drehenden und sich radial verschiebenden Auflage liegt so daß praktisch eine Verteilung gemäß einer Spirale stattfindet. Diese bekannte Vorrichtung welche in eine Fertigungsanlage für Pizza integriert ist teilt sämtliche Bewegungen dem Grundprodukt zu während die Düse aus welcher das Garnierprodukt fließt ortsfest angebracht ist. Diese Lösung schließt den Einsatz von herkömmlichen Förderbändern oder Förderketten für das Grundprodukt aus. Es ist also entweder eine Fortbewegung auf rotierender Auflage von der Station der Formung des Grundproduktes bis zur Backstation oder zur Auswurfstation des fertigen Produktes erfordet, wobei die Rotation eventuell nur an der Gamierstation erfolgt, oder es muß ein mechanisierter Wechsel von einer traditionellen oder immerhin nicht rotierenden Auflage auf eine für die nachfolgende Bearbeitung, bzw. für den Backvorgang, geeignete Auflage erfolgen. Dies erschwert auch Lösungen welche z.B. eine Heizung der Auflage während der Weiterförderung, bzw. während des Gamierens, des Grundproduktes vorsehen.

Die gleichmäßige und regelmäßige Verteilung in Spiralform ist gewährleistet wenn eine konstante Steigung der Spirale, ein ununterbrochenes und gleichmäßiges Ausfließen des Gamierproduktes und vor allem auch eine gleichbleibende Geschwindigkeit mit welcher das Garnierprodukt auf das Grundprodukt auftrifft, gesichert sind. Als Variante ist die gleichmäßige Verteilung auch durch Regelung der Menge (Fördermenge) des Gamierproduktes im Verhältnis zur Änderung der Geschwindigkeit mit welcher das Garnierprodukt auf das darunterliegende Grundprodukt auftrifft, möglich.

Es ist weiters aus der DE 200 01 194 U eine Vorrichtung zum Fertigen von Nahrungs- und Genussmitteln bekannt, wobei mehrere an einem Träger vorgesehene Abgabe-, bzw. Austrittsöffnungen zum Ausbringen einer Nahrungs- und Genussmittelmasse über einem Antrieb und eine Steuerung in wenigstens einer Achsrichtung in einer, zur Ablagefläche parallelen, Ebene bewegt werden. Die Steuereinheit kann dabei den Antrieb derart beeinflussen dass, z.B. die Nahrungsmasse auch spiralförmig auf eine darunter liegende Ablage aufgebracht wird. Die Mechanik des Antriebes ist in der genannten Schrift nicht beschrieben. Eine derartige Vorrichtung ist, z.B. für die flächendeckende gleichmäßige Aufbringung einer Tomatensauce auf einem Pizzafladen innerhalb kurz begrenzter Zeit, ungeeignet.

Die Erfindung stellt sich die Aufgabe einen Verteiler der eingangs genannten Art zu schaffen welcher eine hohe Geschwindigkeit der Verteilung des Gamierproduktes auf dem Grundprodukt, unabhängig von der Homogenität des Grundprodukt oder von solchen Fördermitteln welche die eventuelle Behandlung des Grundproduktes, z.B. durch Wärme, auch während der Garnierphase ermöglichen, wobei auch die Arbeiten für die Reinhaltung und die Wahrung der Hygiene vereinfacht werden.

Zur Lösung dieser Aufgabe schlägt die Erfindung vor die Düse, bzw. das Ende des Schlauches durch welchen das Garnierprodukt zugeführt wird, mit den sämtlichen erforderlichen Bewegungen auszustatten um die gleichmäßige Verteilung auf dem Grundprodukt zu erreichen, ohne daß für das Grundprodukt besondere Fördermittel eingesetzt werden welche diesem Drehbewegungen und/oder eine Verschiebung vermitteln, welche nicht jene der Weiterbeförderung von einer Bearbeitungsstation zur nächsten ist.

Die Erfindung nutzt somit das bekannte System der spiralenförmigen Verteilung, wobei das Garnierprodukt auf das Grundprodukt fällt; um dies zu erreichen schlägt die Erfindung eine nach vertikaler Drehachse rotierende Vorrichtung vor welche mit einer Gewindespindel ausgestattet ist welche mechanisch mit dem rotierenden Teil der Vorrichtung verbunden ist und welche das Schlauchende oder die Düse für den Austritt des Garnierproduktes, während der Rotation in einer horizontalen Ebene oberhalb des Grundproduktes radial derart verschiebt, daß die Verteilung des Garnierproduktes gemäß einer Spirale mit konstanter Steigung, ohne Bewegung des Grundproduktes, erfolgt. Um eine möglichst homogene Verteilung zu erreichen ist die Geschwindigkeit mit welcher die Spirale gezogen wird, während dem gesamten Garniervorgang welcher vorzugsweise am Umfangsbereich des Grundproduktes beginnt und im Zentrum endet, konstant.

Um dies zu erreichen wird die Drehzahl der Vorrichtung in Funktion der Abnahme des Radius der Spirale erhöht, so daß das Garnierprodukt sich auf dem Grundprodukt immer mit der gleichen Geschwindigkeit ablagert.

Die erfindungsgemäße Vorrichtung besteht aus einem feststehenden Grundrahmen mit zwei horizontalen Platten, an der unteren dieser ist, im Bereich einer zentralen Bohrung, ein Reibring oder ein Zahnring befestigt während an der oberen Platte koachsial zu diesem Ring und zu dieser Bohrung eine Buchse drehbar gelagert ist welche von einem Elektromotor angetrieben wird und mit Lagerplatten für eine Gewindespindel fest verbunden ist welche durch ihre Drehung einen Wagen in Achsrichtung bewegt und um das Ende des Schlauches für die Zuführung des Garnierproduktes radial zu verschieben. Der Antrieb der Gewindespindel erfolgt mittels Reibrad welches mit dem Reibring in Kontakt steht, bzw. mittels Zahnrad welches in einen Zahnkranz eingreift.

Durch die Drehung der Buchse und somit der Lagerung für die Gewindespindel in eine Richtung wird die radiale Verschiebung des Wagens durch die Gewindespindel in eine Richtung, z.B. von außen zur Drehachse der Buchse erreicht, dabei wird das an der Gewindespindel befestigte Reibrad oder Zahnrad am Reibring, bzw. am Zahnring, welcher am feststehenden Rahmen befestigt ist abgerollt. Durch Umkehrung der Drehrichtung der Buchse erhält man das Verschieben des Wagens vom Bereich der Drehachse der Buchse nach außen, also in den Randbereich des darunter liegenden Grundproduktes.

Der biegsame Schlauch für die Zuleitung des Garnierproduktes erstreckt sich frei durch die rotierende Buchse und ist in seinem Endbereich drehbar am radial verschiebbaren Wagen gelagert so daß das austretende Garnierprodukt frei nach unten auf das Grundprodukt fallen kann. Die Lagerung des Schlauchendes verhindert, daß sich der Schlauch während der Ausführung der verschiedenen Bewegungen der Vorrichtung verdreht oder verwickelt und ermöglicht, zwecks Reinigung und Erhaltung der Hygiene, die Demontage und das leichte Auswechseln des Schlauches welcher vorzugsweise ein einziges Stück mit dem Schlauchteil der Peristaltikpumpe für die Förderung des Garnierproduktes bildet. Die Erfindung schließt nicht aus, daß die Drehgeschwindigkeit des Schlauchendes oder der Düse für den Austritt des Garnierproduktes konstant gehalten wird, wodurch sich mit Abnahme des Radius der Spirale eine Verminderung der Geschwindigkeit ergibt mit welcher das Garnierprodukt sich auf dem Grundprodukt ablagert, was zwecks gleichmäßiger Aufbringung und Verteilung des Garnierproduktes, eine proportionale Erhöhung der zugeführten Garniermenge erfordert.

Um die Reinigungsarbeiten zu begrenzen und um die Hygiene zu wahren ermöglicht die erfindungsgemäße Vorrichtung das leichte und schnelle Auswechseln des Schlauches welcher ein einziges Austauschteil mit einer einzigen Schlauchkupplung bildet und auf handliche Art ausgezogen, bzw. eingezogen werden kann.

Die Erfindung wird anschließend anhand eines in den beigelegten Zeichnungen schematisch dargestellten Ausführungsbeispieles eines erfindungsgemäßen Verteilers einer Garniervorrichtung näher erklärt, dabei erfüllen die Zeichnungen rein erklärenden, nicht begrenzenden Zweck.

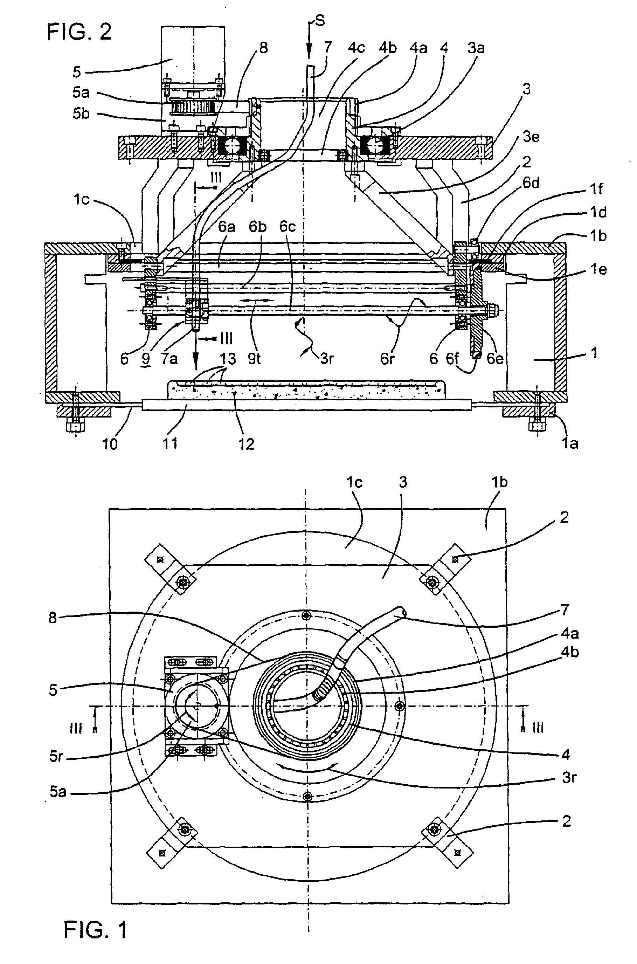

Die Fig. 1 ist die Draufsicht auf einen erfindungsgemäßen Verteiler.
Die Fig. 2 zeigt eine Schnittdarstellung gemäß der in Fig. 1 gezeigten Schnittebene II-II welche die vertikale Achse des in Fig. 1 gezeigten Verteilers beinhaltet.

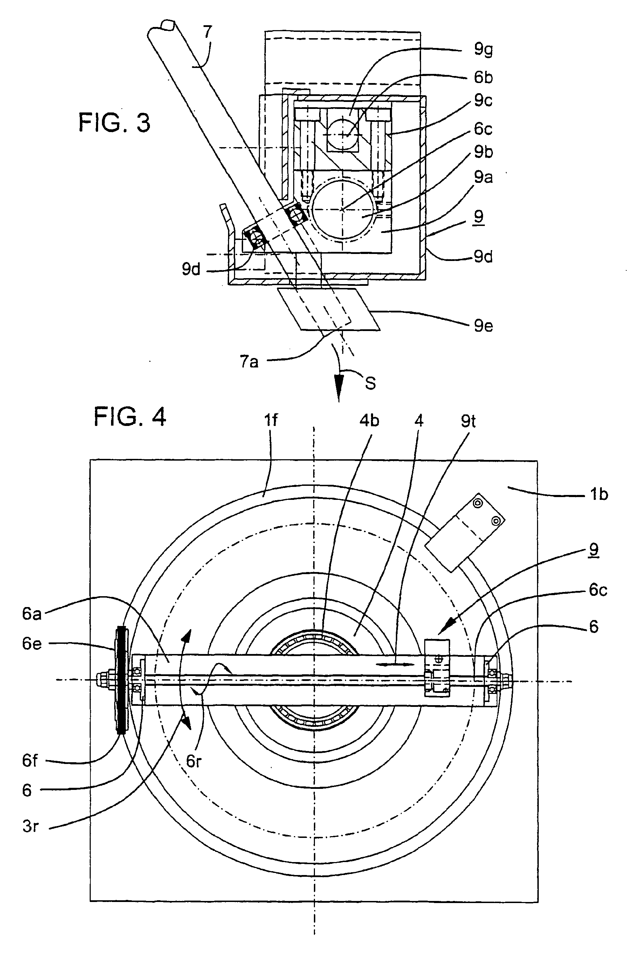

Die Fig. 3 zeigt die Seitenansicht, teilweise in Schnittdarstellung, des durch Gewindespindel angetriebenen Wagens des erfindungsgemäßen Verteilers.
Die Fig. 4 zeigt den in den Fig. 1 und Fig. 2 gezeigten Verteiler mit der Halterung für die Gewindespindel und mit dem Wagen ohne Verkleidung.

Am Rahmen 10 eines Förderbandes oder einer Förderkette 11 sind mittels Klemmen 1a seitliche Träger 1 befestigt welche am oberen Ende eine Platte 1 b mit zentraler Bohrung 1 c tragen. Über dieser zentrale Bohrung 1 c und koachsial zu dieser wird mittels Arme 2 einer zweiten Platte 3 getragen welche zur ersten beabstandet und parallel ist und im Zentrum welcher eine Buchse 4 drehbar 3r mittels Kugellager 3a gelagert ist und welche außen eine Riemenscheibe oder eine Rille 4a für einen Riemen 8 trägt mittels welchem die Bewegung von der Riemenscheibe 5a eines Elektromotors 5 auf die Buchse 4 übertragen wird. An der Unterseite der Buchse 4 sind kopfseitig zwei Arme 3c befestigt welche nach unten abstehen und an deren unterem Ende senkrechte, zueinander parallele, Lagerplatten 6 für eine drehbare 6r Gewindespindel 6c, eine Leitspindel 6b und ein Verbindungselement 6a, befestigt sind. Die Gewindespindel 6c ist an einem, über einer der Lagerplatten 6 hinausragenden, Enden mit einem Reibrad 6e versehen welches sich mit seinem gummibeschichteten Umfangsbereich 6f auf dem Reibring 1f welcher mittels Ringe 1e, 1d am Randbereich der zentralen Bohrung 1 c der Platte 1b befestigt ist, abrollt. Um einen guten Kontakt zwischen dem Umfangsbereich 6f des Reibrades 6e und dem feststehenden Reibring 1f zu sichern, ist ein an der selben Lagerplatte 6 gelagertes Kugellager 6d vorgesehen welches eine zur Achse des Reibrades 6e parallele und senkrecht darüberliegende Drehachse aufweist um so an der Oberseite des Reibringes 1f ein Gegenlager zu bilden.

Mit der Drehung 3r der Buchse 4 rotieren auch die Arme 3e und die Lagerplatten 6 zusammen mit der daran gelagerten Gewindespindel 6c, den Spindeln 6a, 6b und dem verschiebbaren 9t Wagen 9. Mit der Drehung 3r wird durch das Reibrad 6e und den mit der Platte 1b fest verbundenen Reibring 1f die Drehung der Gewindespindel 6c erreicht an welcher ein Gewindemutterteil 9b des Wagens eingreift. Der Wagen 9 weist ein Führungsteil 9c auf, dessen Sitz 9g entlang der feststehenden Leitspindel 6b gleitet. Durch die Drehung 6r der Gewindespindel 6c wird der Wagen 9 entlang der Achse der Gewindespindel 6c verschoben 9t, wobei das Führungsteil 9c entlang der feststehenden Leitspindel 6b gleitet um eine Verdrehung des Wagens 9 zu verhindern. Dieser Mechanismus ermöglicht es die Verschiebung 9t des Wagens 9 an die Drehbewegung 3r zu binden und dadurch eine Verteilung des Garnierproduktes S gemäß einer Spirale 13 mit gleichbleibender Steigung durchzuführen. Um zu sichern daß das Garnierprodukt S, während der Verteilung auf dem Grundprodukt 12, mit gleichbleibender Geschwindigkeit erfolgt und zwar unabhängig von der Distanz des Endes 7a des Schlauches 7 von der Rotationsachse der Buchse 4 und somit vom Zentrum des darunter plazierten Grundproduktes 12, wird die Drehzahl des Motors 5, während der Verschiebung 9t des Wagens 9 vom Außenbereich zum Mittelbereich des Grundproduktes 12, in Funktion des Abnehmens des Radius der Spirale 13 erhöht.

Die Zuführung des Garnierproduktes S erfolgt unter Druck welcher z.B. mittels Peristaltikpumpe erzeugt wird und über einen biegsamen Schlauch 7 welcher frei achsial den Durchlaß 4c der rotierende Buchse 4 durchläuft welche, um während der Drehung 3r Reibung am Schlauch auszuschließen, innen ein Kugellager 4b aufweist. Das Ende 7a des Schlauches 7 oder die Düse für den Ausfluß des Garnierproduktes S ist drehbar in einem am Wagen 9 befestigtem Kugellager 9f gehalten und zusätzlich durch ein ebenfalls am Wagen 9 befestigtem Ringelement 9e geführt.

Die Erfindung schließt nicht aus, daß sich die Gewindespindel 6c nur über einen Bereich erstreckt welcher etwas länger als der Radius des Grundproduktes 12 ist und daß die Gewindespindel 6c durch ein Zahngetriebe angetrieben wird welches die Bewegung von einem Zahnkranz ableitet welcher mit der feststehenden Struktur der Vorrichtung verbunden ist. Die Erfindung schließt weiters nicht aus, daß der gesamte erfindungsgemäße Verteiler verschiebbar gelagert ist so daß er während des Garniervorganges das Grundprodukt 12, während seiner Weiterförderung auf dem Fördermittel 11, ohne dieses anzuhalten, begleitet und nach abgeschlossenem Garniervorgang in die Ausgangsstellung zurückgeführt wird.

Um eine gleichmäßige Verteilung zu erhalten kann, außer dem oben beschriebenen Verfahren, welches eine Änderung der Drehgeschwindigkeit 3r bei einer konstanten und mengengleichen Zuführung des Garnierproduktes S vorsieht, auch ein Verfahren angewandt werden welches, bei gleichbleibender

Drehgeschwindigkeit 3r, eine Änderung der Zuführung des Garnierproduktes S in Funktion der Änderung des Radius der Spirale vorsieht; insbesondere eine Verminderung des Radius bewirkt eine Erhöhung der Fördermenge der Pumpe welche die Vorrrichtung speist.

Die Erfindung schließt weiters nicht aus, daß die Buchse 4 an einer einzigen Platte gelagert ist welche eventuell die Höhe der Platte 1 b einnimmt und welche mit Reibring 1f oder mit Zahnring versehen ist. In diesem Fall weist der achsiale Durchlaß 4c der Buchse 4 einen Durchmesser auf welcher ungefähr der doppelten

Verschiebung des Wagens 9 entspricht. Die Gewindespindel 6c kann weiters auch im Innern des Durchlasses 4c der Buchse 4 oder oberhalb dieser gelagert sein. Die Buchse 4 kann auch durch eine kreisförmige Platte ersetzt werden welche drehbar 3r an der feststehenden Platte 1 b gelagert ist und einen diametral oder auch nur radial angeordneten Durchlaß aufweist, innerhalb welchem oder im Bereich dessen die Gewindespindel 6c samt Wagen 9 gelagert ist.

## Patentansprüche

1. Verteiler für flüssige oder cremeartige Komponenten für die Garnierung von Lebensmitteln welche vorzugsweise runde Form aufweisen, welcher die Verteilung des Gamierproduktes (S) in Form einer Spiral (13) durch Fallen auf das darunterliegende Grundprodukt durchführt, wobei während das Grundprodukt (12) stillsteht oder zusammen mit dem Verteiler weiterbefördert wird und somit gegenüber diesem stillsteht, die Düse oder das Ende (7a) des Schlauches über welchen das Garnierprodukt (S) zugeführt wird, sei es eine Drehbewegung (3r) als auch eine Verschiebung (9t) ausführt, durch deren Kombination (3r, 9t) die Verteilung des Gamierproduktes (S) gemäß einer Spirale (13) auf dem Grundprodukt (12) stattfindet,
**dadurch gekennzeichnet, daß** der Mechanismus um das Ende (7a) des Schlauches (7) für die Zuführung des Gamierproduktes die Drehbewegung (3r) und gleichzeitig die Verschiebung (9t) ausführen zu lassen, aus einer Buchse (4) besteht welche nach einer senkrechten Achse drehbar (3r) im Zentrum einer feststehenden Platte (3) gelagert ist welche über einer zweiten parallelen und konzentrischen Platte (1 b) angeordnet ist und eine Bohrung (1 c) aufweist durch welche sich zwei Arme (3e) erstrecken welche mit ihrer Kopfseite fest an der Unterseite der Buchse (4) befestigt sind und von denen jeder am unteren Ende eine Lagerplatte (6) für eine drehbare (6r) Gewindespindel (6c) trägt welche horizontal angeordnet ist und mit ihrer Rotationsachse die senkrechte Achse der Buchse (4) kreuzt, daß an der Gewindespindel (6c) ein Wagen (9) gelagert ist welcher Halter (9f, 9e) für das Ende (7a) des biegsamen Schlauches (7) aufweist, welcher sich frei durch die Buchse (4) erstreckt und daß der Antrieb an der Buchse (4) erfolgt während die Gewindespindel (6c) die Bewegung über (6r) ein an dieser befestigtes Reibrad (6e) erhält welches mit seinem Umfangsbereich (6f) mit einem darüber oder darunter angeordneten Reibring (1f) welcher mit der feststehenden Struktur des Verteilers verbunden ist, zusammenwirkt.

2. Verteiler gemäß Anspruch 1, **dadurch gekennzeichnet, daß** die Gewindespindel (6c) über ein an dieser befestigtes Zahnrad angetrieben wird welches an einem Zahnkranz eingreift welcher mit der feststehenden Struktur des Verteilers fest verbunden ist.

3. Verteiler gemäß den Ansprüchen 1 und 2, **dadurch gekennzeichnet, daß** an Stelle der beiden feststehenden parallelen, horizontalen Lagerplatten (1b, 3) eine einzige Platte vorgesehen sein kann in deren zentraler Bohrung die Buchse (4) drehbar (3r) gelagert ist und an welcher auch der Reibring (1f), bzw. ein Zahnring befestigt ist und daß in diesem Fall die Lagerplatten (6) für die Gewindespindel (6c) direkt unterhalb der Buchse (4), bzw. an einem Flansch der Buchse (4) befestigt sind.

4. Verteiler gemäß der Ansprüche 1 und 3, **dadurch gekennzeichnet, daß** die Gewindespindel (6c) innerhalb der rotierenden (3r) Buchse (4) gelagert ist welche in diesem Fall eine Bohrung (4c) aufweist deren Durchmesser es ermöglicht die Gewindespindel (6c) in diametraler Stellung aufzunehmen.

5. Verteiler gemäß den Ansprüchen 1 und 3, **dadurch gekennzeichnet, daß** die Gewindespindel (6c) über der drehbaren (3r) Buchse (4) gelagert ist welche in diesem Fall eine Bohrung (4c) aufweist deren Durchmesser mindestens gleich dem doppelten Lauf des Wagens ist oder welche eine exzentrische Bohrung aufweist deren Durchmesser zumindest gleich dem Lauf des Wagens (9) ist und daß in beiden Fällen die Buchse (4) durch eine Scheibe ersetzt werden kann welche drehbar (3r) gelagert ist und einen, gemäß dem Durchmesser, bzw. dem Radius, angeordneten Schlitz für das Ende (7a) des Schlauches (7) aufweist, wobei die Gewindespindel (6c) für den Wagen (9) im Bereich dieser Schlitze gelagert ist.

6. Verteiler gemäß den Ansprüchen von 1 bis 5, **dadurch gekennzeichnet, daß** der Antrieb an der Gewindespindel (6c) erfolgt welche mittels mindestens einem an deren Enden angebrachten Reibrad (6e), bzw. Zahnrad, durch Wirkung auf einen Reibring (1f), bzw. auf einen Zahnring, die Buchse (4) in Drehung (3r) versetzt welche an der feststehenden Struktur der Vorrichtung gelagert ist und daß in diesem Fall zwecks Stromzuleitung für den Motor, Schleifkontakte vorgesehen sind.

7. Verteiler gemäß Anspruch 1, **dadurch gekennzeichnet, daß** die Gleichmäßigkeit der Verteilung des Garnierproduktes (S) **dadurch** erreicht wird, daß die Zuführung der Menge des Gamierproduktes (S) in der Zeiteinheit und auch die Geschwindigkeit mit welcher das Garnierprodukt (S) auf dem darunterliegenden Grundprodukt (12) auftrifft konstant gehalten werden, wobei die konstante Geschwindigkeit durch entsprechendes Verändern der Drehzahl in Funktion der Veränderung des Radius der Spirale (13) erreicht wird.

8. Verteiler gemäß Anspruch 1, **dadurch gekennzeichnet, daß** die Gleichmäßigkeit der Verteilung des Garnierproduktes (S) **dadurch** erreicht wird, daß die Drehzahl (3r) der Buchse (4) und somit des Schlauchendes um die senkrechte Achse der Buchse (4) konstant gehalten wird und die Fördermenge des Gamierproduktes (S) in Funktion der Veränderung des Radius der Spirale (13) verändert wird und zwar so, daß die Verminderung des Radius die Erhöhung der Fördermenge bewirkt.

## Claims

1. A distributor of liquid or creamy ingredients to garnish food products, preferably with a round shape, which distributes the garnishing (S) in the form of a spiral (13), dropping onto the base product below, where, while the base product (12) is stationary or continues to be transported along with the distributor, and so is stationary relative to it, the nozzle or extremity (7a) of the pipe, through which the garnishing (S) passes, performs a rotary movement (3r) and also a translation (9t) and from their combination (3r, 9t) the distribution of the garnishing (S) is in the form of a spiral (13) on the base product (12), **characterised in that** the mechanism, to perform, at the extremity (7a) of the pipe (7) designed for the passage of the garnishing, the rotary movement (3r) and, simultaneously, the translation (9t), consists of a socket (4) which is mounted so that it turns (3r) about a vertical axis, at the centre of a stationary plate (3) which is positioned above a second plate (1b), parallel and concentric, which has a hole (1c), through which pass two arms (3e), fixed, at their top end, rigidly on the lower face of the socket (4) and each of which has, at the lower extremity, a bearing plate (6) for a threaded spindle (6c) which can turn (6r), the spindle being positioned horizontally and with its axis of rotation crossing the vertical axis of rotation of the socket (4), **in that**, on the threaded spindle (6c) is mounted a dolly (9) with supports (9f, 9e) for the extremity (7a) of the flexible pipe (7), which passes freely through the socket (4), and **in that** the driving of the socket (4) is performed while the movement is transmitted to the threaded spindle (6c) via a friction wheel (6e), fixed on it, which co-operates, on its peripheral zone (6f), with a friction ring (1f) positioned above or below, connected to the stationary structure of the distributor.

2. The metering device of Claim 1, **characterized in that** the threaded spindle (6c) is driven via an annular gear that is mounted to the spindle, which toothed gear engages in a gear ring, which is connected permanently with the stationary structure of the metering device.

3. The metering device of Claims 1 and 2, **characterized in that** instead of the two stationary, parallel, horizontal bearing plates (1b, 3), one single plate can be provided in the central bore of which the bushing (4) is pivoted (3r) and on which a friction ring (1f) and/or an annular gear is also mounted, and that in this case, the bearing plates (6) for the threaded spindle (6c) are directly underneath the bushing (4) and/or a flange of the bushing (4).

4. The metering device of Claims 1 and 3, **characterized in that** the threaded spindle (6c) is seated within the rotating (3r) bushing (4), which, in this case, has a bore (4c), the diameter of which bore makes it possible that the threaded spindle (6c) is received in a diametrical position.

5. The metering device of Claims 1 and 3, **characterized in that** the threaded spindle (6c) is seated above the rotatable (3r) bushing (4), which, in this case, has a bore, the diameter of which is at least twice the movement of the carriage, or which has an eccentrical bore, the diameter of which is at least the movement of carriage (9), and that in both cases, the bushing (4) can be replaced by a disk that is pivoted (3r) and that has a slot for the end (7a) of the tube (7) that is arranged according to the diameter and/or the radius, whereas the threaded spindle (6c) for the carriage (9) is seated in the area of these slots.

6. The metering device of Claims 1 through 5, **characterized in that** the threaded spindle (6c) is actuated, which rotates (3r) the bushing (4) via the friction disk (6e) and/or annular gear - mounted at one of its ends - by acting upon the friction ring (1f) and/or a toothed gear, and that in this case, rubbing contacts are provided to supply power to the motor.

7. The metering device of Claim 1, **characterized in that** the uniformity of distributing the garnishing product (S) is achieved such that the time unit of the dispensed volume of the garnishing product (S) and the speed with which the garnishing product (S) touches the basic product (12) underneath, is constant, whereas the constant speed is achieved by changing the revolutions accordingly in relation to changing the radius of the spiral (13).

8. The metering device of Claim 1, **characterized in that** the uniformity of distributing the garnishing product (S) is achieved such that the revolutions (3r) of the bushing (4) and thus of the end of the tube around the perpendicular axis of the bushing (4) remains constant, and the dispensed volume of the garnishing product (S) in proportion to the changing of the radius of the spiral (13) changes such that the reduction of the radius causes the dispensed volume to increase.

## Revendications

1. Distributeur d'ingrédients liquides ou crémeux pour garnir des produits alimentaires présentant de préférence une forme ronde, qui effectue la distribution du produit de garnissage (S) sous la forme d'une spirale (13), par chute sur le produit de base sous-jacent, où, tandis que le produit de base (12) est stationnaire ou continue à être transporté, conjointement avec le distributeur et est ainsi stationnaire par rapport à celui-ci, la buse ou l'extrémité (7a) du tuyau, par l'intermédiaire duquel le produit de garnissage (S) est amené, qu'il effectue un mouvement rotatif (3r) ainsi qu'également une translation (9t), du fait de leur combinaison (3r, 9t) la distribution du produit de garnissage (S) s'effectue selon une spirale (13) sur le produit de base (12), **caractérisé en ce que** le mécanisme, pour faire effectuer, par l'extrémité (7a) du tuyau (7) prévu pour l'amenée de produit de garnissage, le mouvement rotatif (3r) et, simultanément, la translation (9t), est formé d'une douille (4), qui est montée de manière à tourner (3r) selon un axe vertical, au centre d'une plaque (3) stationnaire, et qui est disposée au-dessus d'une deuxième plaque (1b) parallèle et concentrique et présente un perçage (1c), à travers lequel s'étendent deux bras (3e), fixés, par leur côté tête, rigidement sur la face inférieure de la douille (4), et dont chacun porte, à l'extrémité inférieure, une plaque de palier (6) pour une broche filetée (6c) susceptible de tourner (6r), broche disposée horizontalement et croisant, par son axe de rotation, l'axe vertical de la douille (4), **en ce que**, sur la broche filetée (6c), est monté un chariot (9) présentant des supports (9f, 9e) pour l'extrémité (7a) du tuyau (7) flexible, qui s'étend librement à travers la douille (4), et **en ce que** l'entraînement sur la douille (4) s'effectue pendant que la broche filetée (6c) reçoit le mouvement, par l'intermédiaire d'une roue de friction (6e), fixée sur celle-ci, qui coopère, par sa zone périphérique (6f), avec une bague de friction (1f) disposée au-dessus ou au-dessous, reliée à la structure stationnaire du distributeur.

2. Distributeur selon la revendication 1, **caractérisé en ce que** la broche filetée (6c) est entraînée par l'intermédiaire d'une roue dentée fixée sur celle-ci, qui s'engrène sur une couronne dentée, reliée rigidement à la structure stationnaire du distributeur.

3. Distributeur selon les revendications 1 et 2, **caractérisé en ce que**, au lieu des deux plaques de palier (1b, 3) horizontales, parallèles, stationnaires, peut être prévue une plaque unique, dans le perçage central de laquelle la douille (4) est montée en rotation (3r) et sur laquelle également la bague de friction (1f), ou une bague dentée, est fixée, et **en ce que**, dans ce cas, les plaques de palier (6) pour la broche filetée (6c) sont fixées directement au-dessous de la douille (4), respectivement sur une bride de la douille (4).

4. Distributeur selon les revendications 1 et 3, **caractérisé en ce que** la broche filetée (6c) est montée à l'intérieur de la douille (4) rotative (3r), qui, dans ce cas, présente un perçage (4c) dont le diamètre permet de recevoir la broche filetée (6c) en position diamétrale.

5. Distributeur selon les revendications 1 et 3, **caractérisé en ce que** la broche filetée (6c) est montée sur la douille (4) rotative (3r) qui, dans ce cas, présente un perçage (4c), dont le diamètre est au moins égal au double de la course du chariot, ou qui présente un perçage excentrique, dont le diamètre est au moins égal à la course du chariot (9) et **en ce que**, dans les deux cas, la douille (4) est remplacée par un disque, qui est monté de façon à pouvoir tourner (3r) et présente une fente, disposée selon le diamètre ou le rayon, pour l'extrémité (7a) du tuyau (7), la broche filetée (6c) pour le chariot (9) étant montée dans la zone de ces fentes.

6. Distributeur selon les revendications 1 à 5, **caractérisé en ce que** l'entraînement s'effectue sur la broche filetée (6c), qui, à l'aide d'au moins une roue à friction (6e), ou une roue dentée montée sur ses extrémités, par effet sur une bague de friction (1f) ou sur une bague dentée, met en rotation (3r) la douille (4), qui est montée sur la structure stationnaire du dispositif, et **en ce que**, dans ce cas, des contacts à balais frotteurs sont prévus, pour assurer l'alimentation électrique du moteur.

7. Distributeur selon la revendication 1, **caractérisé en ce que** la régularité de la distribution du produit de garnissage (S) est obtenue par le fait que l'amenée de la quantité de produit de garnissage (S), dans l'unité de temps, et également la vitesse, à laquelle le produit de garnissage (S) arrive sur le produit de base (12) sous-jacent, sont maintenues à une valeur constante, la vitesse constante étant obtenue par modification correspondante de la vitesse de rotation, en fonction de la modification du rayon de la spirale (13).

8. Distributeur selon la revendication 1, **caractérisé en ce que** la régularité de la distribution du produit de garnissage (S) est obtenue par le fait que la vitesse de rotation (3r) de la douille (4) et, ainsi, de l'extrémité du tuyau, autour de l'axe vertical de la douille (4), est maintenue constante, et la quantité transférée de produit de garnissage (S) est modifiée en fonction de la modification du rayon de la spirale (13) et, précisément, de manière que la diminution du rayon provoque l'augmentation de la quantité transférée.
